Europäisches Patentamt

European Patent Office

Office européen des brevets

(19)

(11) Numéro de publication: **0 387 957**
**A1**

(12) **DEMANDE DE BREVET EUROPEEN**

(21) Numéro de dépôt: **90200570.1**

(51) Int. Cl.5: **H04B 7/26**

(22) Date de dépôt: **12.03.90**

(30) Priorité: **17.03.89 FR 8903524**

(43) Date de publication de la demande:
**19.09.90 Bulletin 90/38**

(84) Etats contractants désignés:
**BE DE ES FR GB**

(71) Demandeur: **TELECOMMUNICATIONS RADIOELECTRIQUES ET TELEPHONIQUES T.R.T.**
**88 rue Brillat Savarin**
**F-75640 Paris Cédex 13(FR)**

(84) **FR**

Demandeur: **N.V. Philips' Gloeilampenfabrieken**
**Groenewoudseweg 1**
**NL-5621 BA Eindhoven(NL)**

(84) **BE DE ES GB**

(72) Inventeur: **Millet, Guy, Societé Civile S.P.I.D.**
**209 rue de L'Université**
**F-75007 Paris(FR)**

(74) Mandataire: **Chaffraix, Jean et al**
**Société Civile S.P.I.D. 156, Boulevard Haussmann**
**F-75008 Paris(FR)**

(54) **Procédé de transmission d'informations dans un réseau de transmission de données par par voie radioélectrique et système pour lequel est mis en oeuvre le procédé.**

(57) Ce procédé de transmission d'informations par voie radioélectrique peut être avantageusement appliqué au domaine de la radio-mobile. Les informations émises par les stations mobiles et découpées en fragments protégés par un code détecteur et correcteur d'erreurs sont reçues par une ou plusieurs stations fixes réception $RC_1$, ..., $RC_n$, qui transmettent les fragments reçus après les avoir repérés (rang, qualité) à la station centrale CS qui reconstitue les informations en effectuant la somme logique de tous les fragments corrects reçus, éliminant les fragments déjà reçus et demandant une répétition des fragments non reçus.

Application : Radio-mobile.

## Procédé de transmission d'informations dans un réseau de transmission de données par voie radioélectrique et système pour lequel est mis en oeuvre le procédé.

La présente invention a pour objet un procédé de transmission d'informations dans un réseau de transmission de données par voie radioélectrique constitué d'une station centrale, d'une station fixe émission, de plusieurs stations fixes réception fonctionnant en diversité d'espace et de plusieurs stations mobiles émission/réception. L'invention concerne également le système pour lequel est mis en oeuvre ledit procédé de transmission d'informations.

Dans de tels réseaux, la transmission de données, par voie radioélectrique, entre stations mobiles et stations fixes, pose un problème technique relatif à la sélection de la station fixe réception qui doit offrir le meilleur fonctionnement lorsque la station mobile se déplace ou se trouve en limite de zones (réception en diversité d'espace) et donc au choix du critère de sélection de la station fixe qui assurera la meilleure réception.

La solution classique consiste à effectuer le choix de la station réception selon un critère de qualité de la liaison radioélectrique, par exemple, utiliser le récepteur offrant le meilleur rapport signal/bruit, ou encore sélectionner le récepteur présentant le plus faible taux d'erreurs. Une telle solution est connue et utilisée par exemple dans le réseau d'exploitation des autobus de la région liégeoise (Belgique).

Cependant l'exploitation de ce type de solution entraîne un inconvénient. En effet, lorsque la station mobile se déplace ou lorsqu'elle est en limite de zone le message en cours de transmission peut éventuellement être perdu, et pour éviter cette perte de message il est indispensable d'effectuer une gestion pour sélectionner la station fixe relativement au déplacement de la station mobile.

La présente invention propose un procédé du genre précité mais qui ne présente pas l'inconvénient du procédé connu.

Pour cela le procédé de transmission d'informations du genre mentionné dans le préambule est remarquable en ce que les informations émises par chaque station mobile et reçues par au moins une station fixe réception sont divisées en fragments, chacun protégé par un code détecteur et correcteur d'erreurs, lesdites informations reçues étant ensuite transmises, en précisant le rang et la qualité des fragments, à la station centrale qui reconstitue alors les informations selon un procédé de reconstitution des informations en effectuant une somme logique de tous les fragments corrects reçus, les fragments déjà reçus étant éliminés alors qu'il est demandé une répétition des fragments non reçus.

Ainsi la décomposition des informations en fragments chacun référencé en même temps que la protection de ceux-ci au moyen d'un code détecteur et correcteur d'erreurs comme recommandé par différentes administrations (P.T.T., voir Spécification technique CNET ST/PAA/DIR/1382, janvier 1987) autorisent à une reconstitution efficace desdites informations. Le principal avantage d'un tel procédé réside dans le fait qu'il n'est plus nécessaire de sélectionner la ou les stations fixes réception puisque les informations sont reconstituées en rassemblant les fragments qui peuvent alors provenir des différentes stations fixes réception, celles-ci transmettant à la station centrale les fragments reçus en indiquant leur rang et leur qualité (fragment correct ou non).

La description suivante en regard des dessins annexés, le tout donné à titre d'exemple, fera bien comprendre comment l'invention peut être réalisée.

La figure 1 représente de manière très schématique une configuration de réseau de transmission de données par voie radioélectrique.

La figure 2 représente les dispositifs de réception et de reconstitution des informations émises par les stations mobiles.

La figure 3 donne un exemple de réalisation du procédé selon l'invention dans sa phase de reconstitution des informations.

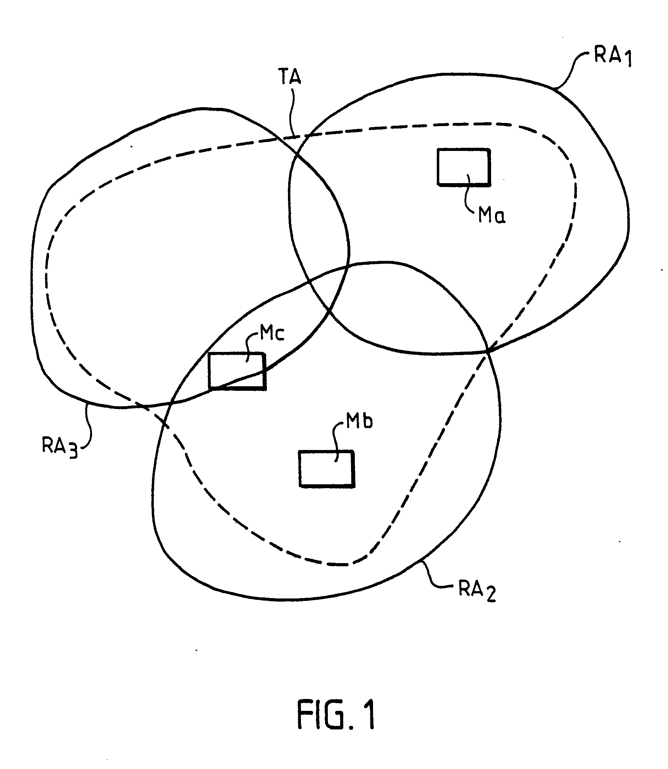

Sur la figure 1 est proposé un exemple de configuration de réseau de transmission de données par voie radioélectrique. Le réseau de transmission comporte une station fixe émission pouvant émettre vers différentes stations mobiles, Ma, Mb, Mc, ..., la zone de couverture radio de la station fixe émission est représentée par la zone TA délimitée par un contour en pointillé. Le réseau comporte également une station centrale et plusieurs stations fixes réception fonctionnant en diversité d'espace et dont les zones de réception sont délimitées par les contours en trait plein $RA_1$, $RA_2$, $RA_3$,... . La station centrale est reliée aux stations fixes réception au moyen de liaisons numériques.

Pour une meilleure appréhension de l'invention considérons un exemple simple relativement aux stations mobiles émission/réception référencées Ma, Mb, Mc sur la figure. Lorsque les stations mobiles Ma et Mb, telles que situées sur la figure 1 émettent des informations, de manière générale il ne se pose pas de problème quant au choix de la station fixe réception. En effet les informations émises par la station Ma ne sont, dans ce cas, certainement reçues que par la station fixe dont la zone de réception est délimitée par le contour $RA_1$, de

même les informations émises par la station Mb ne sont certainement reçues que par la station fixe dont la zone de réception est délimitée par le contour RA$_2$. Si, par contre c'est la station mobile Mc, telle que située sur la figure 1, qui émet des informations, un problème se pose quant au choix de la station fixe réception, car lesdites informations peuvent alors être reçues par les stations dont les zones de réception sont délimitées par les contours RA$_2$ et RA$_3$. Conformément à l'idée de l'invention ce problème est résolu, les informations émises par la station mobile Mc étant divisées en fragments, chacun protégé par un code détecteur et correcteur d'erreurs, sont reçues par ces deux dernières stations fixes réception, dont les zones de réception sont délimitées par les contours RA$_2$ et RA$_3$, puis transmises, en précisant le rang et la qualité desdits fragments, à la station centrale qui reconstitue les informations en effectuant une somme logique de tous les fragments corrects reçus, les fragments déjà reçus étant éliminés alors qu'il est demandé une répétition des fragments non reçus.

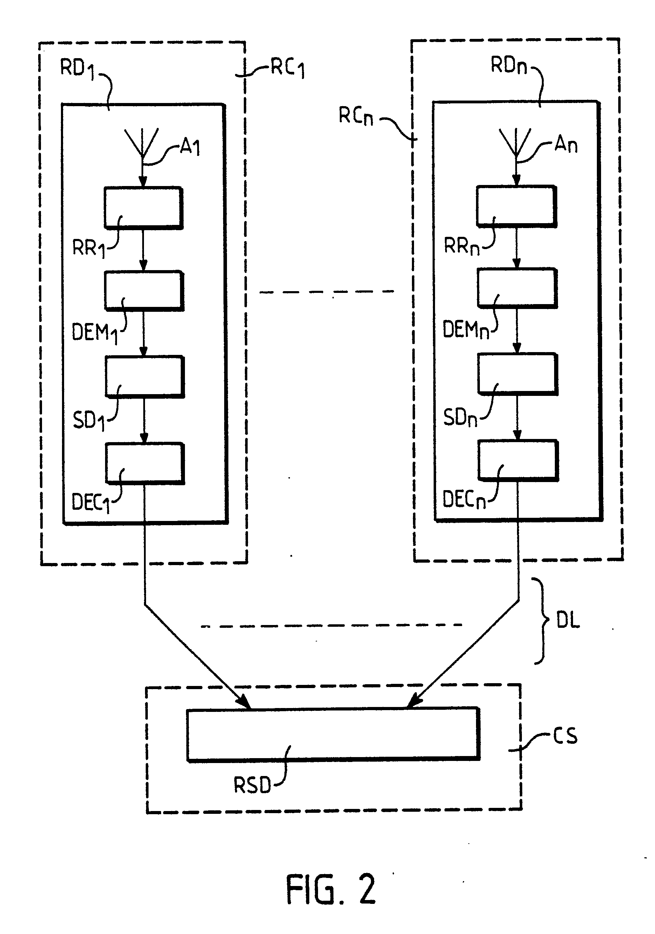

Sur la figure 2 sont représentés les dispositifs de réception et de reconstitution des informations émises par les stations mobiles. Chaque station fixe réception RC$_1$, RC$_2$, ..., RC$_n$ comporte, entre autres, un dispositif de réception RD$_1$, RD$_2$, ..., RD$_n$, chargé de recueillir et de traiter les fragments d'informations provenant des stations mobiles, puis après traitement de les faire parvenir à la station centrale CS. Les informations émises par voie radioélectrique par les stations mobiles sont recueillies à la station fixe réception RC$_1$, ..., RC$_n$, par le dispositif de réception RD$_1$, ..., RD$_n$, au moyen d'une antenne A$_1$, ..., A$_n$, reliée au récepteur radio RR$_1$, ..., RR$_n$. A la sortie du récepteur le signal BF est démodulé au moyen d'un démodulateur DEM$_1$, ..., DEM$_n$, puis appliqué à un dispositif de synchronisation SD$_1$, ..., SD$_n$, à la sortie duquel le signal découpé en fragments est contrôlé par un dispositif de détection et de correction d'erreurs DEC$_1$, ..., DEC$_n$, qui permet de préciser le rang et la qualité de chaque fragment (fragment correct ou non correct). Les fragments ainsi repérés sont transmis à la station centrale CS au moyen de liaisons numériques DL connues en soi utilisant par exemple des modems.

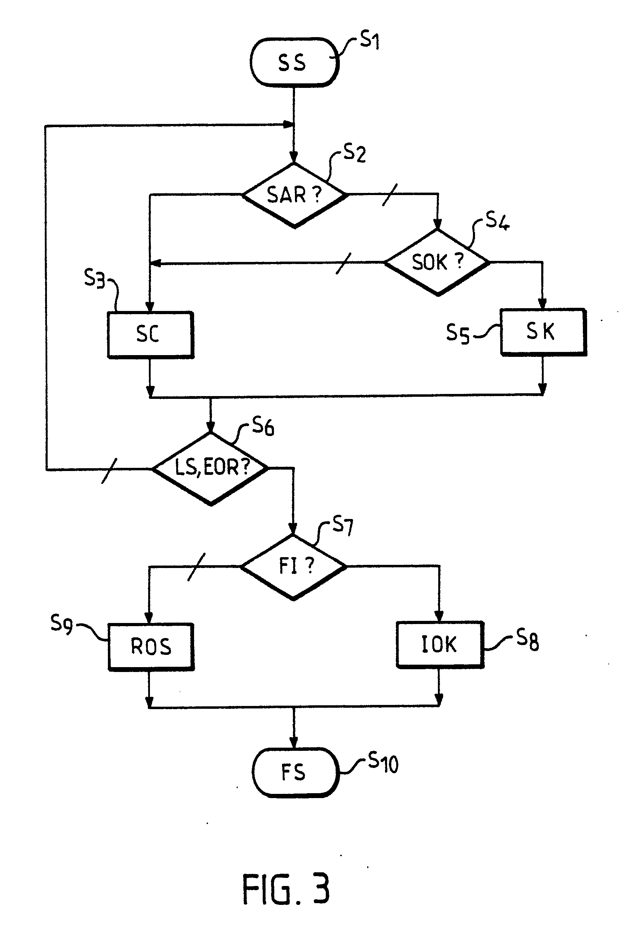

La station centrale CS comporte, entre autres, un dispositif de reconstitution des informations RSD pour reconstituer lesdites informations à partir des fragments repérés et transmis par l'ensemble des stations fixes réception RC$_1$, ..., RC$_n$. Pour cela le dispositif RSD utilise un procédé de reconstitution (décrit au moyen de la figure 3) selon lequel est effectuée une somme logique de tous les fragments corrects reçus, les fragments déjà reçus étant éliminés alors qu'il est demandé une répétition des fragments non reçus. Le dispositif RSD peut être un microprocesseur coopérant avec un ensemble de mémoires mortes et de mémoires vives.

La figure 3 propose un schéma possible de détachement du procédé de reconstitution effectué par le dispositif RSD. Selon ce procédé les fragments reçus sont stockés et analysés dans un premier temps un par un, l'analyse consistant à vérifier d'une part et dans un premier temps si le fragment a déjà été reçu ou s'il n'est pas correct pour l'éliminer ou s'il n'a pas été déjà reçu et qu'il est correct pour le conserver et ceci jusqu'au dernier fragment précisant la fin de réception de l'information, d'autre part et dans un second temps si l'information complète a été reçue pour la valider ou n'a pas été complètement reçue pour demander une répétition des fragments non reçus.

Ainsi sur la figure 3 dans l'état initial S1 les fragments sont stockés SS, puis ils sont analysés dans un premier temps un par un. A l'état S2 est posée une question SAR : "Le fragment a-t-il été déjà reçu ?". Si la réponse est oui l'état suivant est l'état S3 au cours duquel le fragment est éliminé SC. Si la réponse est non, au prochain état S4 est posée la question SOK : "Le fragment est-il correct ?". Si la réponse est non l'état suivant est de nouveau l'état S3 pour lequel le fragment est éliminé SC. Si la réponse est oui le fragment est conservé SK, c'est l'état S5. A l'état S6 qui fait suite aux états S3 ou S5, est posée la question LS, EOR : "Est-ce le dernier fragment ou est-ce la fin de la réception ?". Si la réponse est non il y a retour à l'état S2 puis aux états suivants et ceci jusqu'au dernier fragment de l'information. Si la réponse est oui il y a passage à l'état S7 au cours duquel est posée la question FI : "L'information a-t-elle été reçue complètement ?". Si la réponse est oui l'information est validée IOK, c'est l'état S8. Si la réponse est non il est demandé une répétition des fragments non reçus correctement ROS, c'est l'état S9. L'état S10 fait suite aux états S8 ou S9, c'est l'état final FS, après lequel sont attendus pour être analysés soit les fragments non reçus correctement de la précédente information, soit les fragments de nouvelles informations.

Un tel procédé de transmission d'informations est avantageux car il permet d'éviter efficacement les pertes d'informations sans nécessiter une gestion rigoureuse et malcommode pour sélectionner les stations fixes réception pour tenir compte des déplacements des stations mobiles.

Dans une réalisation préférée ce procédé peut être appliqué à un réseau de transmission de données offrant aux divers utilisateurs, à partir de terminaux spécialement adaptés, la possibilité d'interroger des banques de données distantes et d'échanger des informations ou messages tout en optimisant l'utilisation des ressources radio. L'échange, la saisie et le traitement de l'information sont effectués en temps réel favorisant la communication dans l'espace et dans le temps. En outre, le système permet, si nécessaire, de chiffrer les données circulant sur le réseau de transmission.

**Revendications**

1. Procédé de transmission d'informations dans un réseau de transmission de données par voie radioélectrique constitué d'une station centrale, d'une station fixe émission, de plusieurs stations fixes réception fonctionnant en diversité d'espace et de plusieurs stations mobiles émission/réception, caractérisé en ce que les informations émises par chaque station mobile et reçues par au moins une station fixe réception sont divisées en fragments, chacun protégé par un code détecteur et correcteur d'erreurs, lesdites informations reçues étant ensuite transmises, en précisant le rang et la qualité des fragments, à la station centrale qui reconstitue alors les informations selon un procédé de reconstitution des informations en effectuant une somme logique de tous les fragments corrects reçus, les fragments déjà reçus étant éliminés alors qu'il est demandé une répétition des fragments non reçus.

2. Procédé de transmission d'informations selon la revendication 1, caractérisé en ce que suivant le procédé de reconstitution des informations les fragments reçus sont stockés et analysés dans un premier temps un par un, l'analyse consistant à vérifier d'une part et dans un premier temps si le fragment a déjà été reçu ou s'il n'est pas correct pour l'éliminer ou s'il n'a pas été déjà reçu et qu'il est correct pour le conserver et ceci jusqu'au dernier fragment précisant la fin de réception de l'information, d'autre part et dans un second temps si l'information complète a été reçue pour la valider ou n'a pas été complètement reçue pour demander une répétition des fragments non reçus.

3. Système utilisant le procédé conforme à l'une des revendications 1 à 2 constitué par un réseau de transmission de données par voie radioélectrique comportant une station centrale, une station fixe émission, plusieurs stations fixes réception fonctionnant en diversité d'espace et plusieurs stations mobiles émission/réception, système dans lequel les informations émises par chaque station mobile divisées en fragments, chacun protégé par un code détecteur et correcteur d'erreurs, sont reçues par au moins une station fixe réception qui traite les fragments reçus en précisant leur rang et leur qualité et les transmet à la station centrale qui reconstitue alors les informations selon un procédé de reconstitution des informations en effectuant une somme logique de tous les fragments corrects reçus, les fragments déjà reçus étant éliminés alors qu'il est demandé une répétition des fragments non reçus.

FIG. 1

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | IEE PROCEEDINGS SECTION A-I, vol. 132, no. 5, aout 1985, pages 433-440, Stevenage, Herts, GB; M. DARNELL et al.: "Problems of mobile HF communication and techniques for performance improvement" * Page 438, colonne de gauche, ligne 61 - colonne de droite, ligne 6; page 438, colonne de droite, lignes 11-28 * --- | 1-3 | H 04 B    7/26 |
| Y | IEE PROCEEDINGS SECTIONS A-I, vol. 130, no. 6, partie F, octobre 1983, pages 527-531, Old Woking, Surrey, GB; P.J. CADMAN et al.: "Data transmission over VHF and UHF land mobile radio channels" * Page 528, colonne de gauche, lignes 30-37 * --- | 1-3 | |
| A | IEEE TRANSACTIONS ON VEHICULAR TECHNOLOGY, vol. VT-33, no. 3, août 1984, pages 88-97, IEEE, New York, US; R.A. COMROE et al.: "ARQ schemes for data transmission in mobile radio systems" * Page 91, colonne de gauche, lignes 10-18; page 98, colonne de gauche, lignes 1-5 * ----- | 1-3 | DOMAINES TECHNIQUES RECHERCHES (Int. Cl.5)<br><br>H 04 B<br>H 04 L |

Le présent rapport a été établi pour toutes les revendications

| Lieu de la recherche | Date d'achèvement de la recherche | Examinateur |
|---|---|---|
| LA HAYE | 17-05-1990 | CRETAINE P.A. |